# NOUVEAU FASCICULE DE BREVET EUROPEEN

(11) **EP 2 760 930 B2**
(45) Date de publication et mention de la décision concernant l'opposition: **14.01.2026**
(45) Mention de la délivrance du brevet: 16.01.2019
(21) Numéro de dépôt: 12766439.9
(22) Date de dépôt: 26.09.2012
(51) Int. Cl.: C08L 7/00

(54) **PNEUMATIQUE A ADHERENCE AMELIOREE SUR SOL MOUILLE**
REIFEN MIT VERBESSERTER GRIFFIGKEIT AUF NASSEM BODEN
TYRE WITH IMPROVED GRIP ON WET GROUND

(30) Priorité: 26.09.2011 FR 1158542
(43) Date de publication de la demande: 06.08.2014
(73) Titulaire: Compagnie Générale des Etablissements Michelin, 63000 Clermont-Ferrand (FR)
(72) Inventeur: LESAGE, Pierre, F-63040 Clermont-Ferrand Cedex 9 (FR); LOPITAUX, Garance, F-63040 Clermont-Ferrand Cedex 9 (FR); VASSEUR, Didier, F-63040 Clermont-Ferrand Cedex 9 (FR)
(74) Mandataire: M.F.P. Michelin
(86) Numéro de dépôt international: PCT/EP2012/068945
(87) Numéro de publication internationale: WO 2013/045482

(56) Documents cités:
- FR-A1- 2 829 459
- US-A- 3 938 574
- US-A1- 2005 148 713

## Description

Le domaine de l'invention est celui des compositions de caoutchouc pour pneumatiques, plus particulièrement des compositions de caoutchouc pour bandes de roulement de pneumatiques du type tourisme, deux roues ou camionnette.

Une bande de roulement de pneumatique doit obéir de manière connue à un grand nombre d'exigences techniques, souvent antinomiques, parmi lesquelles une faible résistance au roulement, une résistance élevée à l'usure, ainsi qu'une adhérence élevée sur route sèche comme mouillée.

Ces compromis de propriétés, en particulier du point de vue de la résistance au roulement et de la résistance à l'usure, ont pu être améliorés ces dernières années sur les « Pneus Verts » à faible consommation d'énergie, destinés en particulier aux véhicules tourisme, grâce notamment à l'emploi de nouvelles compositions de caoutchouc faiblement hystérétiques ayant pour caractéristique d'être renforcées majoritairement de charges inorganiques renforçantes, notamment de silices hautement dispersibles capables de rivaliser, du point de vue du pouvoir renforçant, avec les noirs de carbone conventionnels de grade pneumatique.

L'amélioration des propriétés d'adhérence, particulièrement sur sol mouillé, sans pénaliser tout au moins notablement la résistance au roulement, reste cependant une préoccupation constante des concepteurs de pneumatiques.

Poursuivant leurs recherches, les demanderesses ont découvert une composition de caoutchouc particulière, à base d'un coupage d'élastomères spécifique et d'un taux élevé de charge inorganique renforçante, qui permet d'améliorer encore la performance d'adhérence sur sol mouillé de ces pneumatiques à basse résistance au roulement.

Ainsi l'invention a pour objet un pneumatique dont la bande de roulement comporte une composition de caoutchouc comportant au moins :
- à titre de premier élastomère diénique, 55 à 95 pce de caoutchouc naturel ou de polyisoprène de synthèse ;
- à titre de deuxième élastomère diénique, 5 à 45 pce d'un polybutadiène ou copolymère de butadiène ayant une température de transition vitreuse (Tg) qui est supérieure à -70°C ;
- à titre de charge renforçante, plus de 90 pce et moins de 150 pce d'une charge inorganique, la charge inorganique étant un charge minérale du type siliceuse ;
- à titre de plastifiant, plus de 10 pce d'une résine hydrocarbonée thermoplastique présentant une température de transition vitreuse (Tg) supérieure à 20°C et de 10 à 30 pce d'un agent plastifiant liquide à 23°C.

Les pneumatiques de l'invention sont particulièrement destinés à équiper des véhicules à moteur de type tourisme, incluant les véhicules 4x4 (à quatre roues motrices) et véhicules SUV (*"Sport Utility Vehicles"*.), camionnette ainsi que des véhicules deux roues (notamment motos).

L'invention ainsi que ses avantages seront aisément compris à la lumière de la description et des exemples de réalisation qui suivent.

### I. DESCRIPTION DETAILLEE DE L'INVENTION

Dans la présente description, sauf indication expresse différente, tous les pourcentages (%) indiqués sont des pourcentages en masse.

L'abréviation "pce" (usuellement *"phr"* en anglais) signifie parties en poids pour cent parties d'élastomère ou caoutchouc (du total des élastomères si plusieurs élastomères sont présents).

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Toutes les valeurs de température de transition vitreuse « Tg » sont mesurées de manière connue par DSC (Differential Scanning Calorimetry) selon la norme ASTM D3418 (1999).

Le pneumatique de l'invention a donc pour caractéristique essentielle que sa bande de roulement comporte une composition de caoutchouc comprenant au moins un coupage de deux élastomères diéniques spécifiques, un taux élevé de charge inorganique renforçante, ainsi qu'un système plastifiant à base de résine hydrocarbonée thermoplastique, composants qui vont être décrits en détail ci-après.

### I-1. Coupage d'élastomères diéniques

La composition de caoutchouc de la bande de roulement du pneu de l'invention a pour première caractéristique essentielle de comporter au moins un coupage de deux élastomères diéniques spécifiques :
- à titre de premier élastomère diénique, 55 à 95 pce de caoutchouc naturel ou de polyisoprène de synthèse ;
- à titre de deuxième élastomère diénique, 5 à 45 pce d'un polybutadiène ou copolymère de butadiène ayant une Tg supérieure à -70°C.

Le taux de premier élastomère diénique est de préférence compris dans un domaine de 60 à 90 pce, en particulier de 65 à 85 pce. Parmi les polyisoprènes de synthèse, sont utilisés de préférence des polyisoprènes ayant un taux (% molaire) de liaisons cis-1,4 supérieur à 90%, plus préférentiellement encore supérieur à 98%.

Le taux de deuxième élastomère diénique est de préférence compris dans un domaine de 10 à 40 pce, en particulier de 15 à 35 pce.

A titre de monomères butadiène conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène.

Par copolymère de butadiène, on entend ici un copolymère d'au moins un monomère butadiène et d'au moins un autre monomère (et bien entendu également tout mélange de tels copolymères) ; en d'autres termes, ledit copolymère à base de butadiène comporte par définition au moins des unités butadiène (issues du monomère butadiène) et des unités issues d'un autre monomère. A titre d'exemples de copolymères de butadiène préférentiels, peuvent être cités notamment ceux choisis dans le groupe constitué par les copolymères de styrène-butadiène (SBR), les copolymères d'isoprène-butadiène (BIR), les copolymères d'isoprène-butadiène-styrène (SBIR), et les mélanges de tels copolymères.

Parmi les polybutadiènes ou copolymères de butadiène, conviennent en particulier les polybutadiènes ayant une teneur (% molaire) en unités -1,2 comprise entre 4% et 80% ou ceux ayant une teneur (% molaire) en cis-1,4 supérieure à 80% plus particulièrement supérieure à 90%, les copolymères de butadiène-isoprène et notamment ceux ayant une teneur en isoprène comprise entre 5% et 90% en poids et une Tg entre - 40°C et - 70°C, les copolymères de butadiène-styrène-isoprène ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 20°C et - 70°C.

Selon un mode de réalisation particulièrement préférentiel, le copolymère de butadiène est un copolymère SBR, ce SBR pouvant être un SBR émulsion ou ESBR (c'est-à-dire préparé par polymérisation en émulsion), un SBR solution ou SSBR (c'est-à-dire préparé par polymérisation en solution), ou un mélange des deux. Plus préférentiellement encore, la Tg de ce SBR est supérieure à -50°C, plus préférentiellement supérieure à -30°C, en particulier supérieure à -25°C. L'homme du métier sait comment modifier la microstructure d'un copolymère à base de styrène et de butadiène, en particulier d'un SBR, pour augmenter et ajuster sa Tg, notamment en jouant sur les teneurs en styrène, en liaisons -1,2 ou encore en liaisons trans-1,4 de la partie butadiénique.

Ledit copolymère de butadiène, notamment de butadiène et styrène, peut avoir toute microstructure qui est fonction des conditions de polymérisation utilisées, notamment de la présence ou non d'un agent modifiant et/ou randomisant et des quantités d'agent modifiant et/ou randomisant employées. Il peut être par exemple à blocs, statistique, séquencé, microséquencé, et être préparé en dispersion ou solution ; il peut être couplé et/ou étoilé ou encore fonctionnalisé avec un agent de couplage et/ou d'étoilage ou de fonctionnalisation, par exemple étoilé étain. On peut citer par exemple des groupes fonctionnels silanol ou polysiloxane ayant une extrémité silanol (tels que décrits par exemple dans EP 0 778 311 ou US 6 013 718), des groupes alkoxysilanes (tels que décrits par exemple dans EP 0 890 607 ou US 5 977 238, WO 2009/133068), des groupes carboxyliques (tels que décrits dans US 6 815 473 ou US 2006/0089445) ou encore des groupes polyéthers (tels que décrits par exemple dans US 6 503 973).

Selon un mode de réalisation particulier de l'invention, on utilise par exemple un copolymère à base de styrène et de butadiène, en particulier un SBR, qui est porteur d'au moins une (c'est-à-dire une ou plusieurs) fonction SiOR, R étant l'hydrogène ou un radical hydrocarboné comportant préférentiellement de 1 à 4 atomes de carbone, en particulier un méthyle ou un éthyle. Cette fonction SiOR peut se situer à une extrémité de la chaîne élastomère, à l'intérieur même de la chaîne élastomère ou encore comme groupe pendant le long de la chaîne élastomère ; dans le cas où il y a plusieurs fonctions SiOR portées par le copolymère, elles peuvent occuper l'une ou l'autre des configurations. Bien entendu, le copolymère ci-dessus, en particulier SBR, peut être un mélange d'un premier copolymère portant une fonction silanol et d'un deuxième copolymère portant une fonction SiOR (avec R radical hydrocarboné), notamment alcoxysilane.

Selon un autre mode de réalisation particulier, le copolymère à base de styrène et de butadiène, en particulier SBR, qu'il soit porteur ou non de fonction SiOR telle que décrite ci-dessus, est également porteur d'au moins une autre fonction (différente de la fonction SiOR), cette autre fonction étant choisie par exemple dans le groupe constitué par les fonctions époxy, étain ou amine, l'aminé pouvant être une amine primaire, secondaire ou tertiaire.

Au coupage d'élastomères diéniques précédemment décrit pourraient être également associés, en quantité minoritaire, des élastomères diéniques autres que ceux précités.

### 1-2. Charge renforçante

La composition de caoutchouc de la bande de roulement du pneumatique conforme à l'invention a pour autre caractéristique essentielle de comporter une charge inorganique renforçante à un taux supérieur à 90 et inférieur à 150 pce, de préférence supérieur à 90 pce et inférieur à 130 pce.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noir" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes sont utilisées des charges minérales du type siliceuse, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/16387. A titre de charge inorganique renforçante, on citera également les charges minérales du type alumineuse, en particulier de l'alumine (Al2O3) ou des (oxyde)hydroxydes d'aluminium, ou encore des oxydes de titane renforçants.

Selon un mode de réalisation préférentiel de l'invention, la charge inorganique renforçante comprend de 50 à 100% en masse de silice ; en d'autres termes, la silice représente 50 à 100% en masse de la charge inorganique renforçante.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

Selon un mode de réalisation avantageux, la composition de la bande de roulement peut également comporter du noir de carbone. Le noir de carbone, lorsqu'il est présent, est utilisé de préférence à un taux inférieur à 20 pce, plus préférentiellement inférieur à 10 pce (par exemple entre 0,5 et 20 pce, notamment entre 2 et 10 pce). Dans les intervalles indiqués, on bénéficie des propriétés colorantes (agent de pigmentation noire) et anti-UV des noirs de carbone, sans pénaliser par ailleurs les performances apportées par la charge inorganique renforçante.

Pour coupler la charge inorganique renforçante à l'élastomère diénique, on utilise de manière bien connue un agent de couplage (ou agent de liaison) destiné à assurer une connexion suffisante, de nature chimique et/ou physique, entre la charge inorganique (surface de ses particules) et l'élastomère diénique. Cet agent de couplage est au moins bifonctionnel. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (I) suivante:

(I) Z - A - Sₓ - A - Z ,

dans laquelle:
- x est un entier de 2 à 8 (de préférence de 2 à 5) ;
- les symboles A, identiques ou différents, représentent un radical hydrocarboné divalent (de préférence un groupement alkylène en C₁-C₁₈ ou un groupement arylène en C₆-C₁₂, plus particulièrement un alkylène en C₁-C₁₀, notamment en C₁-C₄, en particulier le propylène) ;
- les symboles Z, identiques ou différents, répondent à l'une des trois formules ci-après: 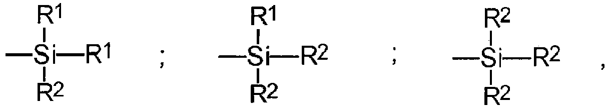 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 précitée (ou US 7 217 751).

A titre d'exemple d'agents de couplage autres qu'un alkoxysilane polysulfuré, on citera notamment des POS (polyorganosiloxanes) bifonctionnels ou encore des polysulfures d'hydroxysilane (R² = OH dans la formule I ci-dessus) tels que décrits par exemple dans les demandes de brevet WO 02/30939 (ou US 6 774 255), WO 02/31041 (ou US 2004/051210), et WO2007/061550, ou encore des silanes ou POS porteurs de groupements fonctionnels azo-dicarbonyle, tels que décrits par exemple dans les demandes de brevet WO 2006/125532, WO 2006/125533, WO 2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080, WO 2008/055986, WO 2010/072685.

Bien entendu pourraient être également utilisés des mélanges des agents de couplage précédemment décrits, comme décrit notamment dans la demande WO 2006/125534 précitée.

La teneur en agent de couplage est préférentiellement comprise entre 2 et 20 pce, plus préférentiellement entre 3 et 15 pce.

### I-3. Système plastifiant

Une autre caractéristique essentielle de la composition de caoutchouc de la bande de roulement du pneumatique conforme à l'invention est de comporter, à titre de plastifiant, plus de 10 pce d'une résine hydrocarbonée thermoplastique présentant une Tg supérieure à 20°C et de 10 à 30 pce d'un agent plastifiant liquide à 23°C.

La dénomination "résine" est réservée dans la présente demande, par définition, à un composé qui est solide à température ambiante (23°C), par opposition à un agent plastifiant liquide tel qu'une huile.

Les résines hydrocarbonées sont des polymères bien connus de l'homme du métier, essentiellement à base de carbone et hydrogène mais pouvant comporter d'autres types d'atomes, utilisables en particulier comme agents plastifiants ou agents tackifiants dans des matrices polymériques. Elles sont par nature miscibles (i.e., compatibles) aux taux utilisés avec les compositions de polymères auxquelles elles sont destinées, de manière à agir comme de véritables agents diluants. Elles ont été décrites par exemple dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubber Tires and Mechanical Goods"*). Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Leur Tg est de préférence supérieure à 25°C, notamment supérieure à 30°C (le plus souvent comprise entre 30°C et 100°C).

De manière connue, ces résines hydrocarbonées peuvent être qualifiées aussi de résines thermoplastiques en ce sens qu'elles se ramollissent par chauffage et peuvent ainsi être moulées. Elles peuvent se définir également par un point ou température de ramollissement (en anglais, *"softening point"*). La température de ramollissement d'une résine hydrocarbonée est généralement supérieure d'environ 50 à 60°C à sa valeur de Tg. Le point de ramollissement est mesuré selon la norme ISO 4625 (méthode «Ring and Ball »). La macrostructure (Mw, Mn et Ip) est déterminée par chromatographie d'exclusion stérique (SEC) comme indiqué ci-après.

Pour rappel, l'analyse SEC, par exemple, consiste à séparer les macromolécules en solution suivant leur taille à travers des colonnes remplies d'un gel poreux ; les molécules sont séparées selon leur volume hydrodynamique, les plus volumineuses étant éluées en premier. L'échantillon à analyser est simplement préalablement solubilisé dans un solvant approprié, le tétrahydrofurane à une concentration de 1 g/litre. Puis la solution est filtrée sur un filtre de porosité 0,45 µm, avant injection dans l'appareillage. L'appareillage utilisé est par exemple une chaîne chromatographique "Waters alliance" selon les conditions suivantes : solvant d'élution : le tétrahydrofurane ; température 35°C; concentration 1 g/litre ; débit :1 ml/min ; volume injecté : 100 µl; étalonnage de Moore avec des étalons de polystyrène ; jeu de 3 colonnes "Waters" en série ("Styragel HR4E", "Styragel HR1" et "Styragel HR 0.5") ; détection par réfractomètre différentiel (par exemple "WATERS 2410") pouvant être équipé d'un logiciel d'exploitation (par exemple "Waters Millenium").

Un étalonnage de Moore est conduit avec une série d'étalons commerciaux de polystyrène à faible Ip (inférieur à 1,2), de masses molaires connues, couvrant le domaine de masses à analyser. On déduit des données enregistrées (courbe de distribution massique des masses molaires) la masse molaire moyenne en masse (Mw), la masse molaire moyenne en nombre (Mn), ainsi que l'indice de polymolécularité (Ip = Mw/Mn). Toutes les valeurs de masses molaires indiquées dans la présente demande sont donc relatives à des courbes d'étalonnages réalisées avec des étalons de polystyrène.

Selon un mode de réalisation préférentiel de l'invention, la résine hydrocarbonée présente au moins une quelconque, plus préférentiellement l'ensemble des caractéristiques suivantes :
- une Tg supérieure à 25°C (en particulier compris entre 30°C et 100°C), plus préférentiellement supérieure à 30°C (en particulier entre 30 C et 95°C);
- un point de ramollissement supérieur à 50°C (en particulier compris entre 50°C et 150°C) ;
- une masse molaire moyenne en nombre (Mn) comprise entre 400 et 2000 g/mol, préférentiellement entre 500 et 1500 g/mol ;
- un indice de polymolécularité (Ip) inférieur à 3, préférentiellement à 2 (rappel : Ip = Mw/Mn avec Mw masse molaire moyenne en poids).

A titres d'exemples de telles résines hydrocarbonées, on peut citer celles choisies dans le groupe constitué par les résines d'homopolymère ou copolymère de cyclopentadiène (en abrégé CPD), les résines d'homopolymère ou copolymère de dicyclopentadiène (en abrégé DCPD), les résines d'homopolymère ou copolymère de terpène, les résines d'homopolymère ou copolymère de coupe C5, les résines d'homopolymère ou copolymère de coupe C9, les résines d'homopolymère ou copolymère d'alpha-méthyl-styrène et les mélanges de ces résines. Parmi les résines de copolymères ci-dessus, on peut citer plus particulièrement celles choisies dans le groupe constitué par les résines de copolymère (D)CPD/ vinylaromatique, les résines de copolymère (D)CPD/ terpène, les résines de copolymère terpène phénol, les résines de copolymère (D)CPD/ coupe C5, les résines de copolymère (D)CPD/ coupe C9, les résines de copolymère terpène/ vinylaromatique, les résines de copolymère terpène/ phénol, les résines de copolymère coupe C5/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha-méthylstyrène, l'ortho-méthylstyrène, le méta-méthylstyrène, le para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C₉ (ou plus généralement d'une coupe C₈ à C₁₀).

Plus particulièrement, on peut citer les résines choisies dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

Toutes les résines ci-dessus sont bien connues de l'homme du métier et disponibles commercialement, par exemple vendues par la société DRT sous la dénomination "Dercolyte" pour ce qui concerne les résines polylimonène, par la société Neville Chemical Company sous dénomination "Super Nevtac", par Kolon sous dénomination "Hikorez" ou par la société Exxon Mobil sous dénomination "Escorez" pour ce qui concerne les résines coupe C₅/ styrène ou résines coupe C₅/ coupe C₉, ou encore par la société Struktol sous dénomination "40 MS" ou "40 NS" (mélanges de résines aromatiques et/ou aliphatiques).

Préférentiellement, le taux de résine hydrocarbonée ci-dessus est compris entre 10 et 60 pce, plus préférentiellement compris dans un domaine de 15 à 55 pce.

Toute huile d'extension, qu'elle soit de nature aromatique ou non aromatique, tout agent plastifiant liquide connu pour ses propriétés plastifiantes vis-à-vis d'élastomères diéniques, est utilisable. A température ambiante (23°C), ces plastifiants ou ces huiles, plus ou moins visqueux, sont des liquides (c'est-à-dire, pour rappel, des substances ayant la capacité de prendre à terme la forme de leur contenant), par opposition notamment aux résines plastifiantes hydrocarbonées qui sont par nature solides à température ambiante.

Conviennent particulièrement les agents plastifiants liquides choisis dans le groupe constitué par les polymères diéniques liquides, les huiles polyoléfiniques, les huiles naphténiques, les huiles paraffiniques, les huiles DAE (*Distillate Aromatic Extracts*), les huiles MES (*Medium Extracted Solvates*), les huiles TDAE ( *Treated Distillate Aromatic Extracts*), les huiles RAE (*Residual Aromatic Extract oils*), les huiles TRAE (*Treated Residual Aromatic Extract*), les huiles SRAE (*Safety Residual Aromatic Extract oils*), les huiles minérales, les huiles végétales, les plastifiants éthers, les plastifiants esters, les plastifiants phosphates, les plastifiants sulfonates et les mélanges de ces composés. Selon un mode de réalisation plus préférentiel, l'agent plastifiant liquide est choisi dans le groupe constitué par les huiles MES, les huiles TDAE, les huiles naphténiques, les huiles végétales et les mélanges de ces huiles.

Selon un mode de réalisation préférentiel de l'invention, le plastifiant liquide, notamment huile de pétrole, est du type non aromatique. Un plastifiant liquide est qualifié de non aromatique dès lors qu'il présente une teneur en composés aromatiques polycycliques, déterminé avec l'extrait dans du DMSO selon la méthode IP 346, de moins de 3 % en poids, par rapport au poids total du plastifiant. A ce titre peut être utilisé préférentiellement un agent plastifiant liquide choisi dans le groupe constitué par les huiles MES, les huiles TDAE, les huiles naphténiques (à basse ou haute viscosité, notamment hydrogénées ou non), les huiles paraffiniques et les mélanges de ces huiles. Conviennent également comme huile de pétrole les huiles RAE, les huiles TRAE et les huiles SRAE ou les mélanges de ces huiles, qui contiennent de faibles teneurs en composés polycycliques.

Selon un autre mode de réalisation particulier, le plastifiant liquide est un dérivé terpénique ; à titre d'exemple peut être cité notamment le produit « Dimarone » de Yasuhara.

Conviennent également les polymères liquides issus de la polymérisation d'oléfines ou de diènes, comme par exemple ceux choisis dans le groupe constitué par les polybutènes, les polydiènes, en particulier les polybutadiènes, les polyisoprènes, les copolymères de butadiène et d'isoprène, les copolymères de butadiène ou d'isoprène et de styrène, et les mélanges de ces polymères liquides. La masse molaire moyenne en nombre de tels polymères liquides est préférentiellement comprise dans un domaine allant de 500 g/mol à 50 000 g/mol, plus préférentiellement de 1000 g/mol à 10 000 g/mol. A titre d'exemple peuvent être cités notamment les produits « Ricon » de la société Sartomer.

Selon un mode de réalisation particulièrement préférentiel de l'invention, le plastifiant liquide est une huile végétale. A titre préférentiel est utilisée une huile choisie dans le groupe constituée par les huiles de lin, carthame, soja, maïs, coton, navette, ricin, abrasin, pin, tournesol, palme, olive, noix de coco, arachide, pépin de raisin, et les mélanges de ces huiles, en particulier une huile de tournesol. Cette huile végétale, particulièrement huile de tournesol, est plus préférentiellement une huile riche en acide oléique, c'est-à-dire que l'acide gras (ou l'ensemble des acides gras si plusieurs sont présents) dont elle dérive comporte de l'acide oléique selon une fraction massique au moins égale à 60%, plus préférentiellement au moins égale à 70%, en particulier égale ou supérieure à 80%.

Selon un mode de réalisation particulièrement préférentiel, le taux total de résine hydrocarbonée et d'agent plastifiant liquide est compris entre 30 et 80 pce, de préférence dans un domaine de 35 à 70 pce.

Selon un autre mode de réalisation particulièrement préférentiel, le rapport massique de plastifiant total (c'est-à-dire résine plastifiante hydrocarbonée plus plastifiant liquide optionnel) sur la masse de charge inorganique renforçante est compris entre 35 et 55%, plus préférentiellement compris dans un domaine allant de 40 à 50%.

### I-4. Additifs divers

Les compositions de caoutchouc des bandes de roulement des pneus conformes à l'invention peuvent comporter également tout ou partie des additifs habituellement utilisés dans les compositions d'élastomères destinées à la fabrication de bandes de roulement de pneumatiques, notamment pneumatiques pour véhicule tourisme, des charges autres que celles précitées, par exemple des charges non renforçantes comme la craie, des pigments, des agents de protection tels que cires anti-ozone, anti-ozonants chimiques, anti-oxydants, des résines renforçantes (tels que résorcinol ou bismaléimide), des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs ou retardateurs de vulcanisation, des activateurs de vulcanisation.

Ces compositions peuvent également contenir des activateurs de couplage, des agents de recouvrement de la charge inorganique ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru; ces agents sont par exemple des silanes hydrolysables tels que des alkyl-alkoxysilanes, des polyols, des polyéthers, des amines, des polyorganosiloxanes hydroxylés ou hydrolysables.

### I-5. Préparation des compositions de caoutchouc

Les compositions utilisées dans les bandes de roulement des pneumatiques de l'invention, peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé pour préparer de telles compositions comporte par exemple les étapes suivantes :
- malaxer thermomécaniquement (par exemple en une ou plusieurs fois) les élastomères diéniques avec la charge inorganique renforçante, l'agent de couplage, le cas échéant le noir de carbone, le système plastifiant, jusqu'à atteindre une température maximale comprise entre 110°C et 190°C (phase dite «non-productive ») ;
- refroidir l'ensemble à une température inférieure à 100°C ;
- incorporer ensuite, au cours d'une seconde étape (dite « productive »), un système de réticulation ;
- malaxer le tout jusqu'à une température maximale inférieure à 110°C.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base (les élastomères diéniques, le système plastifiant, la charge inorganique renforçante et l'agent de couplage), puis dans un deuxième temps, par exemple après une à deux minutes de malaxage, les autres additifs, éventuels agents de recouvrement de la charge ou de mise en oeuvre complémentaires, à l'exception du système de réticulation. La durée totale du malaxage, dans cette phase non-productive, est de préférence comprise entre 1 et 15 min.

Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productrice et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication d'une bande de roulement de pneumatique, notamment pour véhicule tourisme.

L'invention s'applique également aux cas où les compositions de caoutchouc précédemment décrites forment une partie seulement de bandes de roulement du type composites ou hybrides, notamment celles constituées de deux couches radialement superposées de formulations différentes, toutes deux sculptées et destinées à entrer en contact avec la route lors du roulage du pneumatique, au cours de la vie de ce dernier. La partie à base de la formulation précédemment décrite pourra alors constituer la couche radialement externe de la bande de roulement destinée à entrer en contact avec le sol dès le début du roulage du pneumatique neuf, ou au contraire sa couche radialement interne destinée à entrer en contact avec le sol ultérieurement.

Selon un mode de réalisation préférentiel, la dureté Shore A de la composition de caoutchouc selon l'invention est comprise dans un domaine allant de 60 à 75, plus préférentiellement de 65 à 75; la dureté Shore A des compositions après cuisson est appréciée conformément à la norme ASTM D 2240-86.

L'invention concerne les pneumatiques précédemment décrits tant à l'état cru (c'est à dire, avant cuisson) qu'à l'état cuit (c'est à dire, après réticulation ou vulcanisation).

### II. EXEMPLES DE REALISATION DE L'INVENTION

### II.1 - Préparation des compositions

On procède pour les essais qui suivent de la manière suivante : on introduit dans un mélangeur interne (taux de remplissage final : environ 70% en volume), dont la température initiale de cuve est d'environ 60°C, successivement les élastomères, la silice, l'agent de couplage, les plastifiants ainsi que les divers autres ingrédients à l'exception du système de vulcanisation. On conduit alors un travail thermomécanique (phase non-productive) en une étape, qui dure au total 5 min, jusqu'à atteindre une température maximale de « tombée » de 165°C. On récupère le mélange ainsi obtenu, on le refroidit puis on incorpore du soufre et un accélérateur type sulfénamide sur un mélangeur (homo-finisseur) à 23°C, en mélangeant le tout (phase productive) pendant un temps approprié (par exemple entre 5 et 12 min).

Les compositions ainsi obtenues sont ensuite calandrées soit sous la forme de plaques ou feuilles fines de caoutchouc pour la mesure de leurs propriétés physiques ou mécaniques, soit extrudées sous la forme de bandes de roulement de pneumatiques pour véhicule tourisme.

### II.2 - Tests de caoutchouterie

Les compositions de caoutchouc ainsi préparées sont ensuite caractérisées, avant et après cuisson, comme indiqué ci-après :
- plasticité Mooney : on utilise un consistomètre oscillant tel que décrit dans la norme française NF T 43-005 (Novembre 1980). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM = 0,83 Newton.mètre) ;
- essais de traction : sauf indication différente, ils sont effectués conformément à la norme française NF T 46-002 de septembre 1988. On mesure en seconde élongation (i.e., après un cycle d'accommodation au taux d'extension prévu pour la mesure elle-même) les modules sécants nominaux (ou contraintes apparentes, en MPa) à 10% d'allongement (notés M10) et 100% d'allongement (notés M100). Toutes ces mesures de traction sont effectuées dans les conditions normales de température (23 ± 2°C) et d'hygrométrie (50 ± 5% d'humidité relative), selon la norme française NF T 40-101 (décembre 1979) ;
- dureté Shore A : la dureté Shore A des compositions après cuisson est appréciée conformément à la norme ASTM D 2240-86.

Pour les besoins de ces essais, quatre compositions de caoutchouc (notées ci-après C-0, C-1, C-2 et C-3) ont été préparées dont la formulation est donnée dans le tableau 1 annexé, le taux des différents produits étant exprimés en pce (parties en poids pour cent parties d'élastomère total).

La composition témoin (C-0) est une composition conventionnelle pour «Pneu Vert» à faible résistance au roulement, de formulation bien connue de l'homme du métier, à base d'un coupage de deux SBR, comportant 90 pce de charge inorganique renforçante (silice), un agent de couplage et, à titre de système plastifiant, d'une part 20 pce d'agent plastifiant liquide (huile TDAE) et d'autre part 20 pce de résine plastifiante thermoplastique ; dans cette composition témoin, le total de plastifiant est donc égal à 40 pce.

Les compositions selon l'invention (C-1, C-2 et C-3) se distinguent essentiellement de la composition témoin (C-0) d'une part par un taux particulièrement élevé de NR (80 pce de NR en lieu et place de 80 pce de SBR) et un taux plus élevé de charge inorganique (silice) dans la fourchette préconisée (plus de 90 pce et moins de 150 pce). Le taux total de plastifiant (résine et plastifiant liquide) a été ajusté dans les différentes compositions selon l'invention, en fonction du taux de charge inorganique, afin de maintenir la rigidité (dureté Shore A) des bandes de roulement à un niveau sensiblement constant, pour une bonne comparaison des performances de roulage des pneumatiques dans les essais qui suivent.

Le tableau 2 donne les propriétés de caoutchouterie avant et après cuisson (30 min à 150°C); le système de vulcanisation est constitué par soufre et sulfénamide. On note que les compositions selon l'invention présentent de manière avantageuse une viscosité à l'état cru nettement réduite par rapport à la composition témoin, gage d'une processabilité (aptitude à la mise en oeuvre à l'état cru) améliorée, ainsi que des modules équivalents.

### II.3 - Tests de roulage des pneumatiques

Toutes les compositions ci-dessus (C-0 à C-3) sont ensuite utilisées comme bandes de roulement de pneumatiques tourisme à carcasse radiale, notés respectivement P-0 (pneus témoins), P-1, P-2 et P-3 (pneus selon l'invention), de dimensions 225/55R16, conventionnellement fabriqués et en tous points identiques hormis les compositions de caoutchouc constitutives de leur bande de roulement. Les pneumatiques sont montés, à l'avant et à l'arrière, sous pression de gonflage nominale, sur un véhicule automobile de marque « BMW », modèle 530, équipé d'un système ABS.

Les pneumatiques sont soumis à un test de freinage sur sol mouillé et sur sol sec à deux températures différentes (à 10°C et à 25°C) consistant à mesurer la distance nécessaire pour passer de 80 km/h à 10 km/h lors d'un freinage brutal sur béton bitumineux (arrosé pour le test sur sol mouillé). Une valeur supérieure à celle du témoin, arbitrairement fixée à 100, indique un résultat amélioré, c'est-à-dire une distance de freinage plus courte. La résistance au roulement est également mesurée sur volant, selon la méthode ISO 87-67 (1992) ; une valeur supérieure à celle du témoin, arbitrairement fixée à 100, indique un résultat amélioré c'est-à-dire une résistance au roulement plus basse.

Les résultats obtenus sont indiqués dans le tableau 3 annexé. On constate de manière inattendue que la performance de freinage sur sol mouillé est très nettement améliorée, d'environ 10% à 25°C et 20-25% à 10°C : ce résultat correspond dans ce test à une distance de freinage raccourcie d'environ 4 mètres et 8 mètres, respectivement, ce qui est particulièrement remarquable pour l'homme du métier.

En outre, on observe dans ces essais que la résistance au roulement n'est pas dégradée sur les pneumatiques conformes à l'invention, qu'elle est même améliorée (réduite) de manière significative (5%) dans le cas des pneus P-3 selon l'invention ; l'adhérence sur sol sec n'est pas dégradée non plus, voire même améliorée de manière significative (3 à 5%).

**Tableau 1**

| Composition n°: | C-0 | C-1 | C-2 | C-3 |
|---|---|---|---|---|
| SBR (1) | 40 | 20 | - | - |
| SBR (2) | 60 | - | - | - |
| SBR (3) | - | - | 20 | 20 |
| NR (4) | - | 80 | 80 | 80 |
| silice (5) | 90 | 110 | 110 | 95 |
| agent de couplage (6) | 7.2 | 8.8 | 8.8 | 7.6 |
| noir de carbone (7) | 4 | 4 | 4 | 4 |
| résine plastifiante (8) | 20 | 30 | 30 | 20 |
| plastifiant liquide (9) | 20 | 20 | 20 | 20 |
| total plastifiant | 40 | 50 | 50 | 40 |
| acide stéarique | 2 | 2 | 2 | 2 |
| cire anti-ozone | 2 | 2 | 2 | 2 |
| antioxydant (10) | 2.5 | 2.5 | 2.5 | 2.5 |
| DPG(11) | 1.8 | 1.8 | 1.8 | 1.8 |
| ZnO | 1.2 | 1.2 | 1.2 | 1.2 |
| accélérateur (12) | 2.0 | 2.0 | 2.0 | 2.0 |
| soufre | 1.2 | 1.2 | 1.2 | 1.2 |
| (1) SBR solution avec 41% de motifs styrène et 24% de motifs 1,2 de la partie butadiène (Tg = -28°C) ; | | | | |
| (2) SBR solution avec 29% de motifs styrène et 78% de motifs trans de la partie butadiène (Tg = -50°C) ; | | | | |
| (3) SBR solution (étoilé Sn) avec 44% de motifs styrène et 41% de motifs 1,2 de la partie butadiène, fonctionnalisé silanol (Tg = -12°C); | | | | |
| (4) caoutchouc naturel ; | | | | |
| (5) silice « Zeosil 1165 MP » de la société Rhodia (type HDS) ; | | | | |
| (6) agent de couplage TESPT (« Si69 » de la société Evonik) ; | | | | |
| (7) grade ASTM N234 (société Cabot) ; | | | | |
| (8) résine C5/C9 ("Escorez ECR-373" de la société Exxon Mobil) ; | | | | |
| (9) huile TDAE (« Vivatec 500 » de la société Klaus Dahleke) ou huile de tournesol (« Lubrirob Tod 1880 » de la société Novance) ; | | | | |
| (10) N-(1,3-diméthylbutyl)-N'-phényl-p-phénylénediamine (société Flexsys) ; | | | | |
| (11) Diphénylguanidine (« Perkacit » DPG de la société Flexsys) ; | | | | |
| (12) N-dicylohexyl-2-benzothiazol-sulfénamide (« Santocure CBS » de la société Flexsys). | | | | |

**Tableau 2**

| Composition N°: | C-0 | C-1 | C-2 | C-3 |
|---|---|---|---|---|
| *Propriétés avant cuisson:* | | | | |
| Mooney (UM) | 63 | 42 | 42 | 40 |
| *Propriétés après cuisson:* | | | | |
| Shore A | 70 | 70 | 72 | 69 |
| M10 | 6.5 | 6.3 | 6.5 | 6.3 |
| M100 | 2.0 | 1.8 | 1.9 | 1.9 |

**Tableau 3**

| Pneumatique : | P-0 | P-1 | P-2 | P-3 |
|---|---|---|---|---|
| résistance au roulement (23°C) | 100 | 100 | 101 | 105 |
| adhérence sur sol mouillé (10°C) | 100 | 126 | 125 | 121 |
| adhérence sur sol mouillé (25°C) | 100 | 111 | 112 | 109 |
| adhérence sur sol sec (10°C) | 100 | - | 105 | 103 |
| adhérence sur sol sec (25°C) | 100 | 103 | 102 | 100 |

## Revendications

1. Pneumatique dont la bande de roulement comporte une composition de caoutchouc comprenant au moins :
- à titre de premier élastomère diénique, 55 à 95 pce de caoutchouc naturel ou de polyisoprène de synthèse ;
- à titre de deuxième élastomère diénique, 5 à 45 pce d'un polybutadiène ou copolymère de butadiène ayant une température de transition vitreuse (Tg) qui est supérieure à -70°C mesurée par Differential Scanning Calorimetry selon la norme ASTM D3418 (1999) ;
- à titre de charge renforçante, plus de 90 pce et moins de 150 pce d'une charge inorganique, la charge inorganique étant une charge minérale de type siliceuse ;
- à titre de plastifiant, plus de 10 pce d'une résine hydrocarbonée thermoplastique présentant une température de transition vitreuse (Tg) supérieure à 20°C mesurée par Differential Scanning Calorimetry selon la norme ASTM D3418 (1999) et de 10 à 30 pce d'un agent plastifiant liquide à 23°C.

2. Pneumatique selon la revendication 1, dans lequel le taux de premier élastomère diénique est compris dans un domaine de 60 à 90 pce.

3. Pneumatique selon la revendication 2, dans lequel le taux de deuxième élastomère diénique est compris dans un domaine de 10 à 40 pce.

4. Pneumatique selon l'une quelconque des revendications 1 à 3, dans lequel le deuxième élastomère diénique est un copolymère butadiène-styrène (SBR).

5. Pneumatique selon la revendication 3, dans lequel le SBR a une Tg qui est supérieure à -50°C, de préférence supérieure à -30°C mesurée par Differential Scanning Calorimetry selon la norme ASTM D3418 (1999).

6. Pneumatique selon l'une quelconque des revendications 1 à 5, dans lequel le taux de charge inorganique renforçante est supérieur à 90 pce et inférieur à 130 pce.

7. Pneumatique selon l'une quelconque des revendications 1 à 6, dans lequel le taux de résine hydrocarbonée est compris entre 10 et 60 pce, de préférence dans un domaine de 15 à 55 pce.

8. Pneumatique selon l'une quelconque des revendications 1 à 7, dans lequel le taux total de résine hydrocarbonée et d'agent plastifiant liquide est compris entre 30 et 80 pce, de préférence dans un domaine de 35 à 70 pce.

9. Pneumatique selon l'une quelconque des revendications 1 à 8, dans lequel la charge inorganique renforçante comprend 50 à 100% en masse de silice.

10. Pneumatique selon l'une quelconque des revendications 1 à 9, dans lequel la résine hydrocarbonée thermoplastique est choisie dans le groupe constitué par les résines d'homopolymère ou copolymère de cyclopentadiène, les résines d'homopolymère ou copolymère de dicyclopentadiène, les résines d'homopolymère ou copolymère de terpène, les résines d'homopolymère ou copolymère de coupe C5, les résines d'homopolymère ou copolymère de coupe C9, les résines d'homopolymère ou copolymère d'alpha-méthyl-styrène, et les mélanges de ces résines.

11. Pneumatique selon l'une quelconque des revendications 1 à 10, dans lequel l'agent plastifiant liquide est choisi dans le groupe constitué par les polymères diéniques liquides, les huiles polyoléfiniques, les huiles naphténiques, les huiles paraffiniques, les huiles DAE, les huiles MES, les huiles TDAE, les huiles RAE, les huiles TRAE, les huiles SRAE, les huiles minérales, les huiles végétales, les plastifiants éthers, les plastifiants esters, les plastifiants phosphates, les plastifiants sulfonates et les mélanges de ces composés.

12. Pneumatique selon la revendication 11, dans lequel l'agent plastifiant liquide est choisi dans le groupe constitué par les huiles MES, les huiles TDAE, les huiles naphténiques, les huiles végétales et les mélanges de ces huiles.

13. Pneumatique selon la revendication 12, dans lequel l'agent plastifiant liquide est une huile végétale, de préférence une huile de tournesol.

14. Pneumatique selon l'une quelconque des revendications 1 à 13, dans lequel le rapport massique de résine hydrocarbonée et d'agent plastifiant liquide, sur la masse de charge inorganique renforçante est compris entre 35% et 55%, préférentiellement compris dans un domaine allant de 40% à 50%.

15. Pneumatique selon l'une quelconque des revendications 1 à 14, **caractérisé en ce qu'**il est un pneumatique de véhicule tourisme, camionnette ou deux roues.

## Patentansprüche

1. Reifen, dessen Lauffläche eine Kautschukzusammensetzung umfasst, mindestens umfassend:
- als erstes Dien-Elastomer 55 bis 95 pce Naturkautschuk oder Synthese-Polyisopren;
- als zweites Dien-Elastomer 5 bis 45 pce eines Polybutadiens oder Butadien-Copolymers mit einer Glasübergangs-temperatur (Tg), die über -70 °C liegt und mit der Differential Scanning Calorimetry gemäß ASTM D3418 (1999) gemessen wird;
- als verstärkenden Füllstoff mehr als 90 pce und weniger als 150 pce eines anorganischen Füllstoffes, wobei der anorganische Füllstoff ein silikatischer mineralischer Füllstoff ist;
- als Weichmacher mehr als 10 pce eines thermoplastischen Kohlenwasserstoffharzes, das eine Glasübergangstemperatur (Tg) über 20 °C aufweist, die mit der Differential Scanning Calorimetry gemäß ASTM-Norm D3418 (1999) gemessen wird, und 10 bis 30 pce eines bei 23 °C flüssigen Weichmachers.

2. Reifen nach Anspruch 1, bei dem der Anteil eines ersten Dien-Elastomers in einem Bereich von 60 bis 90 pce liegt.

3. Reifen nach Anspruch 2, bei dem der Anteil eines zweiten Dien-Elastomers in einem Bereich von 10 bis 40 pce liegt.

4. Reifen nach einem der Ansprüche 1 bis 3, bei dem das zweite Dien-Elastomer ein Butadien-Styrol-Copolymer (SBR) ist.

5. Reifen nach Anspruch 3, bei dem das SBR einen Tg hat, der größer als -50 °C, vorzugsweise größer als -30 °C, ist und der mit der Differential Scanning Calorimetry gemäß ASTM D3418 (1999) gemessen wird.

6. Reifen nach einem der Ansprüche 1 bis 5, bei dem der Anteil eines verstärkenden anorganischen Füllstoffes größer als 90 pce und kleiner als 130 pce ist.

7. Reifen nach einem der Ansprüche 1 bis 6, bei dem der Anteil eines Kohlenwasserstoffharzes zwischen 10 und 60 pce, vorzugsweise in einem Bereich von 15 bis 55 pce, liegt.

8. Reifen nach einem der Ansprüche 1 bis 7, bei dem der Gesamtanteil an Kohlenwasserstoffharz und flüssigem Weichmacher zwischen 30 und 80 pce, vorzugsweise in einem Bereich von 35 bis 70 pce, liegt.

9. Reifen nach einem der Ansprüche 1 bis 8, bei dem der verstärkende anorganische Füllstoff 50 bis 100 Massen-% Siliziumoxid umfasst.

10. Reifen nach einem der Ansprüche 1 bis 9, bei dem das thermoplastische Kohlenwasserstoffharz in der Gruppe ausgewählt ist, bestehend aus den Homopolymer- oder Zyklopentadien-Copolymer-Harzen, den Homopolymer- oder Dizyklopentadien-Copolymer-Harzen, den Homopolymer- oder Terpen-Copolymer-Harzen, den Homopolymer- oder Schnitt C5-Copolymer-Harzen, den Homopolymer- oder Schnitt C9-Copolymer-Harzen, den Homopolymer- oder Alpha-Methyl-Styrol-Copolymer-Harzen und den Gemischen dieser Harze.

11. Reifen nach einem der Ansprüche 1 bis 10, bei dem der flüssige Weichmacher in der Gruppe ausgewählt ist, bestehend aus den flüssigen DienPolymeren, den Polyolefinölen, den Naphthenölen, den Paraffinölen, den DAE-Ölen, den MES-Ölen, den TDAE-Ölen, den RAE-Ölen, den TRAE-Ölen, den SRAE-Ölen, den Mineralölen, den Pflanzenölen, den Ether-Weichmachern, den Ester-Weichmachern, den Phosphat-Weichmachern, den Sulfonat-Weichmachern und den Gemischen dieser Verbindungen.

12. Reifen nach Anspruch 11, bei dem der flüssige Weichmacher in der Gruppe ausgewählt ist, bestehend aus den MES-Ölen, den TDAE-Ölen, den Naphthenölen, den Pflanzenölen und den Gemischen dieser Öle.

13. Reifen nach Anspruch 12, bei dem der flüssige Weichmacher ein Pflanzenöl, vorzugsweise ein Sonnenblumenöl ist.

14. Reifen nach einem der Ansprüche 1 bis 13, bei dem das Massenverhältnis an Kohlenwasserstoffharz und flüssigem Weichmacher zum verstärkenden anorganischen Füllstoff zwischen 35 % und 55 %, vorzugsweise in einem Bereich von 40 % bis 50 %, liegt.

15. Reifen nach einem der Ansprüche 1 bis 14, **dadurch gekennzeichnet, dass** es ein Reifen eines PKWs, eines LKWs oder eines Zweirades ist.

## Claims

1. Tyre, the tread of which comprises a rubber composition comprising at least:
- as first diene elastomer, from 55 to 95 phr of natural rubber or synthetic polyisoprene;
- as second diene elastomer, from 5 to 45 phr of a polybutadiene or butadiene copolymer having a glass transition temperature (Tg) which is greater than -70°C measured by Differential Scanning Calorimetry according to Standard ASTM D3418 (1999);
- as reinforcing filler, more than 90 phr and less than 150 phr of an inorganic filler, said inorganic filler being a mineral filler of the siliceous type;
- as plasticizer, more than 10 phr of a thermoplastic hydrocarbon resin exhibiting a glass transition temperature (Tg) of greater than 20°C measured by Differential Scanning Calorimetry according to Standard ASTM D3418 (1999) and from 10 to 30 phr of a plasticizing agent which is liquid at 23°C.

2. Tyre according to Claim 1, wherein the content of first diene elastomer is within a range from 60 to 90 phr.

3. Tyre according to Claim 2, wherein the content of second diene elastomer is within a range from 10 to 40 phr.

4. Tyre according to any one of Claims 1 to 3, wherein the second diene elastomer is a butadiene/styrene copolymer (SBR).

5. Tyre according to Claim 3, wherein the SBR has a Tg which is greater than -50°C, preferably greater than -30°C measured by Differential Scanning Calorimetry according to Standard ASTM D3418 (1999).

6. Tyre according to any one of Claims 1 to 5, wherein the content of reinforcing inorganic filler is greater than 90 phr and less than 130 phr.

7. Tyre according to any one of Claims 1 to 6, wherein the content of hydrocarbon resin is between 10 and 60 phr, preferably within a range from 15 to 55 phr.

8. Tyre according to any one of Claims 1 to 7, wherein the total content of hydrocarbon resin and liquid plasticizing agent is between 30 and 80 phr, preferably within a range from 35 to 70 phr.

9. Tyre according to any one of Claims 1 to 8, wherein the reinforcing inorganic filler comprises from 50% to 100% by weight of silica.

10. Tyre according to any one of Claims 1 to 9, wherein the thermoplastic hydrocarbon resin is selected from the group consisting of cyclopentadiene homopolymer or copolymer resins, dicyclopentadiene homopolymer or copolymer resins, terpene homopolymer or copolymer resins, C₅ fraction homopolymer or copolymer resins, C₉ fraction homopolymer or copolymer resins, α-methylstyrene homopolymer or copolymer resins and the mixtures of these resins.

11. Tyre according to any one of Claims 1 to 10, wherein the liquid plasticizing agent is selected from the group consisting of liquid diene polymers, polyolefin oils, naphthenic oils, paraffinic oils, DAE oils, MES oils, TDAE oils, RAE oils, TRAE oils, SRAE oils, mineral oils, vegetable oils, ether plasticizers, ester plasticizers, phosphate plasticizers, sulphonate plasticizers and the mixtures of these compounds.

12. Tyre according to Claim 11, wherein the liquid plasticizing agent is selected from the group consisting of MES oils, TDAE oils, naphthenic oils, vegetable oils and the mixtures of these oils.

13. Tyre according to Claim 12, wherein the liquid plasticizing agent is a vegetable oil, preferably a sunflower oil.

14. Tyre according to any one of Claims 1 to 13, wherein the ratio by weight of hydrocarbon resin and liquid plasticizing agent to the weight of reinforcing inorganic filler is between 35% and 55%, preferably within a range extending from 40% to 50%.

15. Tyre according to any one of Claims 1 to 14, **characterized in that** it is a passenger vehicle, van or two-wheel vehicle tyre.
